# EUROPEAN PATENT APPLICATION

(11) **EP 4 166 781 A1**
(43) Date of publication of application: **19.04.2023**
(21) Application number: 22200001.0
(22) Date of filing: 06.10.2022
(51) Int. Cl.: F03D 7/02, F03D 80/70

(54) **YAW BRAKING ASSEMBLY OF A WIND TURBINE**

(30) Priority: 12.10.2021 US 202117498911
(71) Applicant: General Electric Renovables España S.L., 08005 Barcelona (ES)
(72) Inventor: Chacon, Joseph Lawrence, Greenville, SC, 29615 (US); Janicz, Aaron P., Greenville, SC, 29615 (US); Verzella, Philip James, Greenville, SC, 29615 (US); Gadiraju, Kasi Viswanadha Raju, 560066 Bangalore (IN)
(74) Representative: Zimmermann & Partner Patentanwälte mbB

(57) **Abstract**

A braking assembly of a wind turbine includes a slewing ring bearing, at least one first drive mechanism having a first motor and a first drive pinion that rotationally engages the slewing ring bearing. The first motor is pre-tensioned in a first direction by a first amount of force. The braking assembly also includes at least one second drive mechanism having a second motor and a second drive pinion that rotationally engages the slewing ring bearing. The second motor is pre-tensioned in a second direction with a second amount of force. The first direction and the second direction are opposite of each other and the first amount of force are substantially equal to the second amount of force. Thus, the first and second amounts of force substantially cancel each other while also allowing dithering of at least one of the first and second motors, thereby preventing substantial rotational movement of the slewing ring bearing.

## Description

### FIELD

The present disclosure relates in general to wind turbines, and more particularly to systems and methods for braking a yawing rotation of the nacelle of a wind turbine.

### BACKGROUND

Wind power is considered one of the cleanest, most environmentally friendly energy sources presently available, and wind turbines have gained increased attention in this regard. A modern wind turbine typically includes a tower, a generator, a gearbox, a nacelle, and one or more rotor blades. The nacelle includes a rotor assembly coupled to the gearbox and to the generator. The rotor assembly and the gearbox are mounted on a bedplate support frame located within the nacelle. The one or more rotor blades capture kinetic energy of wind using known airfoil principles. The rotor blades transmit the kinetic energy in the form of rotational energy so as to turn a shaft coupling the rotor blades to a gearbox, or if a gearbox is not used, directly to the generator. The generator then converts the mechanical energy to electrical energy and the electrical energy may be transmitted to a converter and/or a transformer housed within the tower and subsequently deployed to a utility grid. Modern wind power generation systems typically take the form of a wind farm having multiple such wind turbine generators that are operable to supply power to a transmission system providing power to an electrical grid.

In order to efficiently produce electrical energy, it is typically desirable for the nacelle of the wind turbine to be oriented in aerodynamic alignment with the winds acting on the wind turbine. In particular, the yaw drive system typically performs this rotation of the nacelle by means of a yaw drive that includes a plurality of (electric or hydraulic) motors with suitable gearboxes for driving gears (pinions) that mesh with an annular gear or gear ring attached to the nacelle or to the wind turbine tower. The nacelle, to which the wind turbine rotor is mounted, can thus be rotated around the tower's longitudinal axis in or out of the wind direction. The rotatable connection between the wind turbine tower and the nacelle is referred to as a yaw bearing.

However, once aerodynamic alignment is achieved via the yaw drive system, additional rotation of the nacelle relative to the tower must be resisted. The resistance to additional rotation is typically provided via a yaw braking system. In particular, the yaw braking system typically resists the rotation by means of brakes (e.g., hydraulic brake calipers and/or electro-brakes of the yaw motors).

The yaw braking systems of some modern wind turbines are typically cylindrical in nature and are inserted through the bedplate support frame. Such yaw braking systems typically utilize the top surface of the yaw bearing as the braking friction surface and the bedplate support frame as the mounting structure for the braking load actuating unit. Thus, such modern yaw braking systems have friction intentionally introduced into the system to mitigate backlash. This friction is generally introduced from pucks or hydraulic brakes. However, such pucks and hydraulic brakes also introduce cost and complexity into the yaw braking system. Still further yaw braking systems may include disc brake arrangements with multiple calipers located on the yaw deck.

Thus, the art is continuously seeking new and improved systems to control the yawing rotation of the nacelle of a wind turbine. Accordingly, the present disclosure is directed to a yaw braking assembly which overcomes the drawbacks of the previous yaw braking assemblies.

### BRIEF DESCRIPTION

Aspects and advantages of the invention will be set forth in part in the following description, or may be obvious from the description, or may be learned through practice of the invention.

In one aspect, the present disclosure is directed to a braking assembly of a wind turbine. The braking assembly includes a slewing ring bearing, at least one first drive mechanism having a first motor and a first drive pinion that rotationally engages the slewing ring bearing. The first motor is pre-tensioned in a first direction by a first amount of force. The braking assembly also includes at least one second drive mechanism having a second motor and a second drive pinion that rotationally engages the slewing ring bearing. The second motor is pre-tensioned in a second direction with a second amount of force. The first direction and the second direction are opposite of each other and the first amount of force is substantially equal to the second amount of force. Thus, the first and second amounts of force substantially cancel each other while also allowing dithering of at least one of the first and second motors, thereby preventing substantial rotational movement of the slewing ring bearing.

In an embodiment, the slewing ring bearing may be a pitch bearing positioned between a rotor blade and a hub of the wind turbine. In another embodiment, the slewing ring bearing may be a yaw bearing positioned between a nacelle and a tower of the wind turbine.

In further embodiments, the first direction may be a clockwise direction and the second direction may be a counter-clockwise direction or vice versa.

In additional embodiments, the first and second drive mechanisms may also include first and second drive gearboxes, respectively. In such embodiments, the first and second drive gearboxes are coupled to each of the first and second drive motors and the first and second drive pinions, respectively.

In other embodiments, the first and second motors may be allowed to move in a dithering or slightly oscillatory manner.

In particular embodiments, the braking assembly may include a plurality of first drive mechanisms and a plurality of second drive mechanisms. In such embodiments, the first drive mechanism may be one of the plurality of first drive mechanisms and the second drive mechanism may be one of the plurality of second drive mechanisms.

In an embodiment, the plurality of first drive mechanisms and the plurality of second drive mechanisms may be arranged circumferentially about the slewing ring bearing in an alternating configuration.

In another embodiment, the braking assembly may include at least one additional brake for applying additional braking force to at least one of the first yaw motor or the second yaw motor when wind speeds exceed a certain threshold or if power is removed from the first or second yaw motors.

In another aspect, the present disclosure is directed to a yaw braking assembly of a wind turbine having a nacelle mounted atop a tower. The yaw braking assembly includes a yaw bearing coupled between the tower and the nacelle. Further, the yaw braking assembly includes at least one first yaw drive mechanism having a first yaw motor and a first yaw drive pinion that rotationally engages the yaw bearing and at least one second yaw drive mechanism comprising a second yaw motor and a second yaw drive pinion that rotationally engages the yaw bearing. The first yaw motor is pre-tensioned in a first direction by a first amount of force and the second yaw motor is pre-tensioned in a second direction with a second amount of force. The first direction and the second direction are opposite of each other. The first amount of force is substantially equal to the second amount of force. Thus, the first and second amounts of force substantially cancel each other while also allowing dithering of at least one of the first and second motors, thereby preventing substantial movement of the yaw bearing, thereby substantially maintaining the nacelle in a predetermined yaw position. It should be understood that the yaw braking assembly may further include any of the additional features described herein.

In yet another aspect, the present disclosure is directed to a method for braking a nacelle of a wind turbine. The method includes providing a yaw bearing between the nacelle and a tower of the wind turbine. The method also includes pre-tensioning a first yaw motor of at least one first yaw drive mechanism in a first direction with a first amount of force. Further, the method includes pre-tensioning a second yaw motor of at least one second yaw drive mechanism in a second direction with a second amount of force, the first amount of force being substantially equal to the second amount of force. Moreover, the method includes engaging a first yaw drive pinion coupled with the first yaw motor of at least one first yaw drive mechanism with the yaw bearing to impart the first amount of force to the yaw bearing via the first yaw motor in the first direction. In addition, the method includes engaging a second yaw drive pinion coupled with the second yaw motor of the at least one second yaw drive mechanism with the yaw bearing to impart the second amount of force to the yaw bearing via the second yaw motor in the second direction, the first direction and the second direction being opposite of each other. Thus, the first and second amounts of force substantially cancel each other while also allowing dithering of at least one of the first and second motors, thereby preventing substantial movement of the yaw bearing so as to maintain the nacelle in a predetermined yaw position. The cancelling out of rotational movement, however, still allows the motors to move or dither to some degree. It should be understood that the method may further include any of the additional steps and/or features described herein.

These and other features, aspects and advantages of the present invention will become better understood with reference to the following description and appended claims. The accompanying drawings, which are incorporated in and constitute a part of this specification, illustrate embodiments of the invention and, together with the description, serve to explain the principles of the invention.

### BRIEF DESCRIPTION OF THE DRAWINGS

A full and enabling disclosure of the present invention, including the best mode thereof, directed to one of ordinary skill in the art, is set forth in the specification, which makes reference to the appended figures, in which:
FIG. 1 illustrates a perspective view of one embodiment of a wind turbine according to the present disclosure;
FIG. 2 illustrates a perspective, internal view of one embodiment of a nacelle of a wind turbine according to the present disclosure;
FIG. 3 illustrates a top view of one embodiment of a yaw bearing of a wind turbine according to the present disclosure;
FIG. 4 illustrates a perspective view of a portion of a wind turbine tower according to the present disclosure;
FIG. 5 illustrates a perspective view of an embodiment of a braking assembly according to the present disclosure;
FIG. 6 illustrates a perspective view of another embodiment of a braking assembly according to the present disclosure;
FIG. 7 illustrates a perspective view of still another embodiment of a braking assembly according to the present disclosure, particularly illustrating additional brakes arranged with first and second motors of the braking assembly;
FIG. 8 illustrates a flow diagram of an embodiment of a method for braking a nacelle of a wind turbine according to the present disclosure;
FIG. 9 illustrates a graph of an embodiment of yaw position in degrees (°) (y-axis) versus time (x-axis) according to the present disclosure, particularly illustrating a move profile of the first and second yaw motors of a plurality of first and second yaw drive mechanisms from zero (0) to six (6) seconds and a braking profile thereafter; and
FIG. 10 illustrates a graph of the yaw system speed (y-axis) versus time (x-axis) according to the present disclosure.

Repeat use of reference characters in the present specification and drawings is intended to represent the same or analogous features or elements of the present invention.

### DETAILED DESCRIPTION

Reference now will be made in detail to embodiments of the invention, one or more examples of which are illustrated in the drawings. Each example is provided by way of explanation of the invention, not limitation of the invention. In fact, it will be apparent to those skilled in the art that various modifications and variations can be made in the present invention without departing from the scope or spirit of the invention. For instance, features illustrated or described as part of one embodiment can be used with another embodiment to yield a still further embodiment. Thus, it is intended that the present invention covers such modifications and variations as come within the scope of the appended claims and their equivalents.

As used herein, the terms "first", "second", and "third" may be used interchangeably to distinguish one component from another and are not intended to signify location or importance of the individual components.

The terms "coupled," "fixed," "attached to," and the like refer to both direct coupling, fixing, or attaching, as well as indirect coupling, fixing, or attaching through one or more intermediate components or features, unless otherwise specified herein.

Approximating language, as used herein throughout the specification and claims, is applied to modify any quantitative representation that could permissibly vary without resulting in a change in the basic function to which it is related. Accordingly, a value modified by a term or terms, such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

Here and throughout the specification and claims, range limitations are combined and interchanged, such ranges are identified and include all the sub-ranges contained therein unless context or language indicates otherwise. For example, all ranges disclosed herein are inclusive of the endpoints, and the endpoints are independently combinable with each other.

Generally, the present disclosure is directed to a yaw braking assembly of a wind turbine. In particular, the yaw braking assembly of the present disclosure provides a means for braking or maintaining a position of a nacelle of the wind turbine via one or more yaw motors of the wind turbine without the use of a friction system, such as pucks or hydraulic brakes, but does not preclude the use in conjunction with a friction system. Thus, in an embodiment, the yaw motors serve as the brakes themselves for a large majority of the time. Furthermore, the system reduces the amount of backlash in the system. In other words, the embedded friction in the system maintains the system dampened in such a way that backlash is prevented. In particular, the yaw braking assembly according to the present disclosure includes a certain number of motors pre-tensioned clockwise and the same number of motors (or at least one other motor) pre-tensioned counter-clockwise with the same amount of pretension with the motors free to dither or move without compromising said pre-tensions. The net result is a net cancelling out of yaw position and effectively locking the system into place, while also allowing the motors to dither.

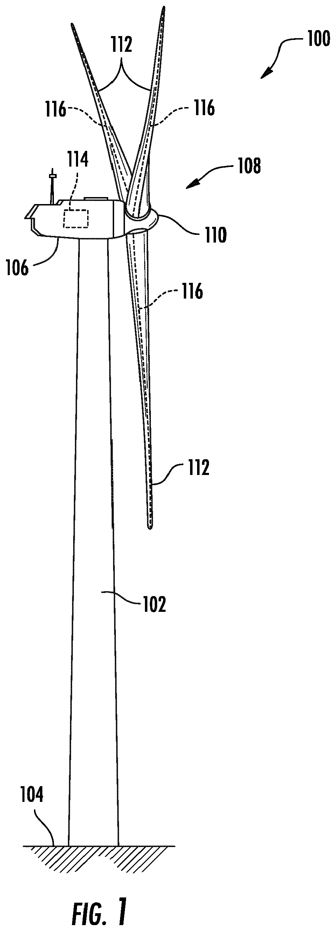

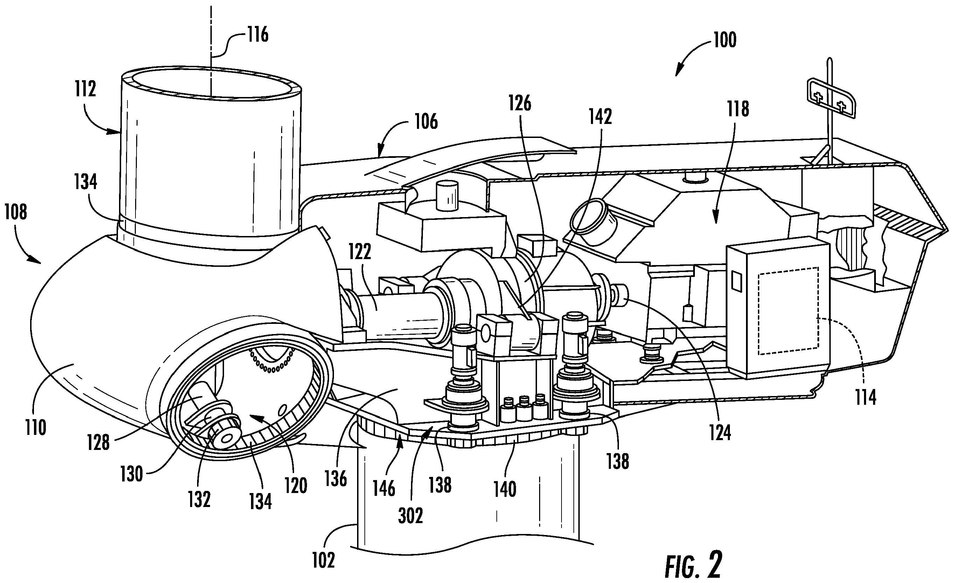

Referring now to the drawings, FIG. 1 illustrates a perspective view of one embodiment of a wind turbine 100 according to the present disclosure. As shown, the wind turbine 100 generally includes a tower 102 extending from a support surface 104, a nacelle 106, mounted on the tower 102, and a rotor 108 coupled to the nacelle 106. The rotor 108 includes a rotatable hub 110 and at least one rotor blade 112 coupled to and extending outwardly from the hub 110. For example, in the illustrated embodiment, the rotor 108 includes three rotor blades 112. However, in an alternative embodiment, the rotor 108 may include more or less than three rotor blades 112. Each rotor blade 112 may be spaced about the hub 110 to facilitate rotating the rotor 108 to enable kinetic energy to be transferred from the wind into usable mechanical energy, and subsequently, electrical energy. For instance, the hub 110 may be rotatably coupled to an electric generator 118 (FIG. 2) positioned within the nacelle 106 to permit electrical energy to be produced.

The wind turbine 100 may also include a turbine controller 114 centralized within the nacelle 106. However, in other embodiments, the turbine controller 114 may be located within any other component of the wind turbine 100 or at a location outside the wind turbine. Further, the turbine controller 114 may be communicatively coupled to any number of the components of the wind turbine 100 in order to control the components. As such, the turbine controller 114 may include a computer or other suitable processing unit. Thus, in several embodiments, the turbine controller 114 may include suitable computer-readable instructions that, when implemented, configure the turbine controller 114 to perform various different functions, such as receiving, transmitting and/or executing wind turbine control signals.

Referring now to FIG. 2, a simplified, internal view of one embodiment of the nacelle 106 of the wind turbine 100 shown in FIG. 1 is illustrated. As shown, the generator 118 may be coupled to the rotor 108 for producing electrical power from the rotational energy generated by the rotor 108. For example, as shown in the illustrated embodiment, the rotor 108 may include a rotor shaft 122 coupled to the hub 110 for rotation therewith. The rotor shaft 122 may be rotatably supported by a main bearing. The rotor shaft 122 may, in turn, be rotatably coupled to a high-speed shaft 124 of the generator 118 through a gearbox 126 connected to a bedplate support frame 136 by one or more torque arms 142. As is generally understood, the rotor shaft 122 may provide a low-speed, high-torque input to the gearbox 126 in response to rotation of the rotor blades 112 and the hub 110. The gearbox 126 may then be configured to convert the low-speed, high-torque input to a high-speed, low-torque output to drive the high-speed shaft 124 and, thus, the generator 118. In an embodiment, the gearbox 126 may be configured with multiple gear ratios so as to produce varying rotational speeds of the high-speed shaft for a given low-speed input, or vice versa.

Each rotor blade 112 may also include a pitch control mechanism 120 configured to rotate each rotor blade 112 about its pitch axis 116. The pitch control mechanism 120 may include a pitch controller configured to receive at least one pitch setpoint command from the turbine controller 114. Further, each pitch control mechanism 120 may include a pitch drive motor 128 (e.g., any suitable electric, hydraulic, or pneumatic motor), a pitch drive gearbox 130, and a pitch drive pinion 132. In such embodiments, the pitch drive motor 128 may be coupled to the pitch drive gearbox 130 so that the pitch drive motor 128 imparts mechanical force to the pitch drive gearbox 130. Similarly, the pitch drive gearbox 130 may be coupled to the pitch drive pinion 132 for rotation therewith. The pitch drive pinion 132 may, in turn, be in rotational engagement with a pitch bearing 134 coupled between the hub 110 and a corresponding rotor blade 112 such that rotation of the pitch drive pinion 132 causes rotation of the pitch bearing 134. Thus, in such embodiments, rotation of the pitch drive motor 128 drives the pitch drive gearbox 130 and the pitch drive pinion 132, thereby rotating the pitch bearing 134 and the rotor blade(s) 112 about the pitch axis 116.

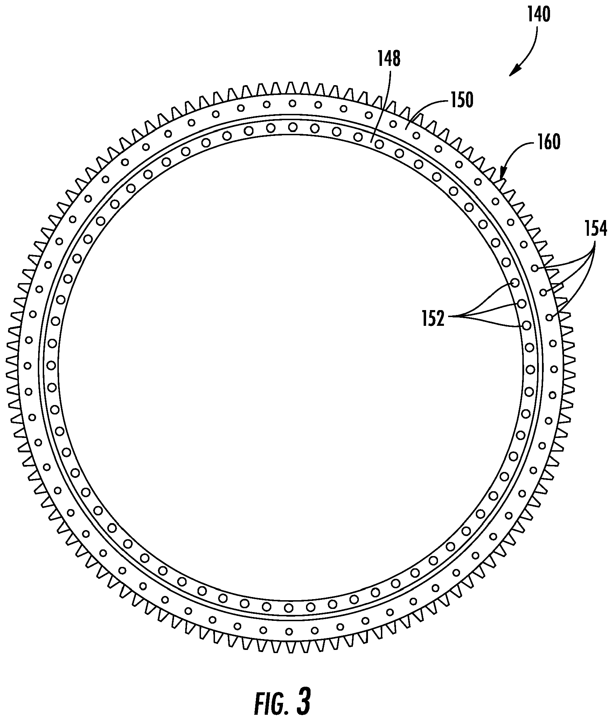

The wind turbine 100 may also include one or more yaw drive mechanisms 138 communicatively coupled to the controller 114. Each yaw drive mechanism(s) 138 may be configured to change the angle of the nacelle 106 relative to the wind by engaging a yaw bearing 140 of the wind turbine 100. The yaw bearing 140 may couple the tower 102 and nacelle 106 at a yaw bearing interface 146. For example, as shown in FIG. 3, the yaw bearing 140 may include an inner race 148 and an outer race 150. As such, the inner race 148 of the yaw bearing 140 may be mounted to the bedplate support frame 136, whereas the outer race 150 of the yaw bearing 140 may be mounted to the tower 102 or vice versa. Mounting may be facilitated through the use of suitable mechanical fasteners, such as nut-bolt combinations, screws, nails, rivets, or other suitable mechanical fastening devices, or through a suitable adhesive, or through a suitable mounting technique such as welding or brazing. In an exemplary embodiment, the inner race 148 may have an inner race hole pattern 152 corresponding to a matching hole pattern in the bedplate support frame 136. Similarly, the outer race 150 may have an outer race hole pattern 154 that corresponds to a matching hole pattern atop the tower 102. In exemplary embodiments, rotation of the yaw bearing 140, such as the rotation of the inner race 148 with respect to the outer race 150, may cause the nacelle 106 to rotate with respect to the tower 102. It should be appreciated that in at least one embodiment, the yaw bearing 140 may be formed with a single race 148, 150 and the tower 102 may serve as the other race.

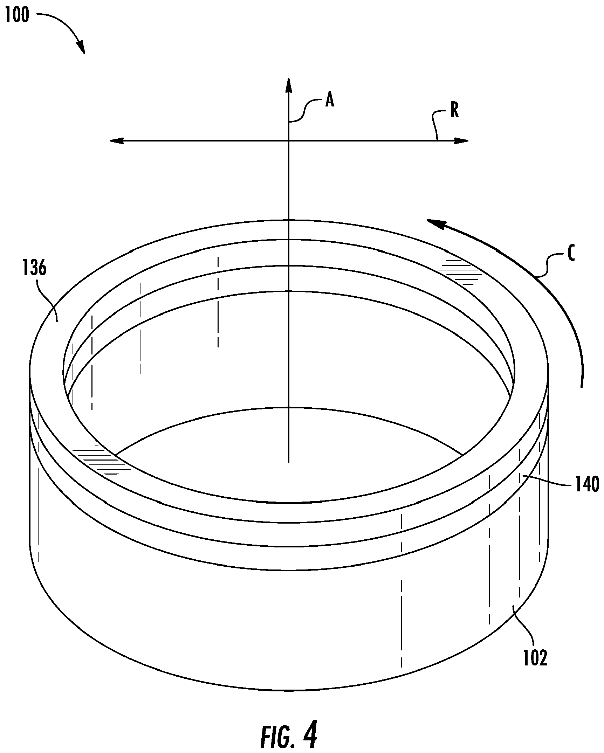

As depicted in FIG. 4, in an embodiment, a reference system may be defined with respect to the wind turbine 100. In such an embodiment, an axis (A) may be defined which is essentially parallel to a centerline of the tower 102 and perpendicular to the support surface 104. The axis (A) may define the axial direction of the wind turbine 100 such that the term "axially" refers to a position, dimension, translation, or movement along, or in reference to, the axis (A). The axis may be intersected by a plane (R). The plane (R) may be oriented essentially perpendicular to the axis (A) and may define a radial direction as used herein. As such, the term "radially" refers to a position, dimension, translation, or movement along, or in reference to, a radius relative to the axis (A). Additionally, an arc (C) may be defined along the plane (R) so as to define a circumferential position, dimension, translation, or movement.

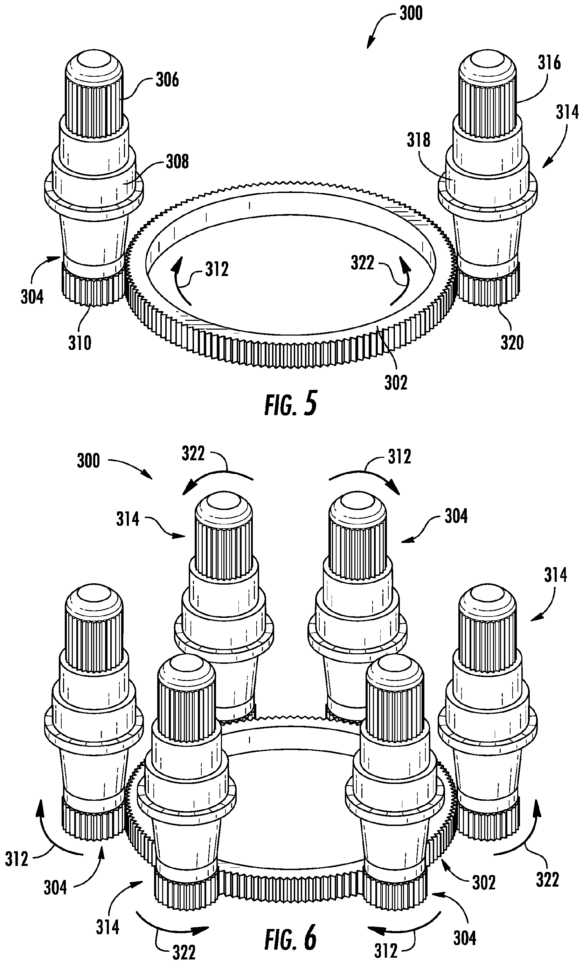

Referring now to FIG. 5, a perspective view of an embodiment of a braking assembly 300 is presented according to the present disclosure. As shown, the braking assembly 300 includes a slewing ring bearing 302. In an embodiment, for example, the slewing ring bearing 302 may correspond to one of the pitch bearings 134 positioned between one of the rotor blades 112 and the hub 110 of the wind turbine 100. In another embodiment, the slewing ring bearing 302 may be the yaw bearing 146 positioned between the nacelle 106 and the tower 102 of the wind turbine 100.

Moreover, as shown in FIG. 5, the braking assembly 300 may include at least one first drive mechanism 304 having a first motor 306 (e.g., any suitable electric, hydraulic, or pneumatic motor), an optional first drive gearbox 308, and a first drive pinion 310 that rotationally engages the slewing ring bearing 302. In particular, as shown, the first motor 306 is pre-tensioned in a first direction (as indicated by arrow 312) by a first amount of force. The braking assembly 300 also includes at least one second drive mechanism 314 having a second motor 316 (e.g., any suitable electric, hydraulic, or pneumatic motor), an optional second drive gearbox 318, and a second drive pinion 320 that rotationally engages the slewing ring bearing 302. In further embodiments, it should be understood that any number of first and second drive mechanisms may be utilized including a plurality of first drive mechanisms 304 and a plurality of second drive mechanisms 314. In such embodiments, as shown in FIG. 6, the plurality of first drive mechanisms 304 and the plurality of second drive mechanisms 314 may be arranged circumferentially about the slewing ring bearing 302 in an alternating configuration.

In such embodiments, the first and second motors 306, 316 may be coupled to the optional first and second drive gearboxes 308, 318, respectively, so that the first and second motors 306, 316 impart mechanical force to the optional first and second drive gearboxes 308, 318, respectively. Similarly, the optional first and second drive gearboxes 308, 318 may each be coupled to the respective first and second drive pinions 310, 320 for rotation therewith. In further embodiments, the first and second drive gearboxes 308, 318 may be omitted.

Further, as shown in FIG. 5, the second motor 316 is pre-tensioned in a second direction (as indicated by arrow 322) with a second amount of force. Thus, as shown, the first direction and the second direction are opposite of each other. In particular embodiments, for example, the first direction may be a clockwise direction and the second direction may be a counter-clockwise direction or vice versa with the pretension being maintained with freedom for dithering in each of the motors 306, 316. Moreover, in such embodiments, the first amount of force is substantially equal to the second amount of force. Accordingly, the first and second amounts of force substantially cancel each other while also allowing dithering of at least one of the first and second motors, thereby preventing substantial rotational movement of the slewing ring bearing 302. More particularly, the first and second drive pinions 310, 320 may be in rotational engagement with the slewing ring bearing 302 such that rotation of the first and second drive pinions 310, 320, respectively, in opposite, but equal directions prevents rotation of the slewing ring bearing 302. It should also be noted that the first and second motors 306, 316 do not necessarily need to be beside each other, but can be, for example, located on different sides of the slewing ring bearing 302. In several embodiments, the first and second motors 306, 316 may be allowed to move in a dithering or slightly oscillatory manner, rather than requiring the first and second motors 306, 316 to remain completely still.

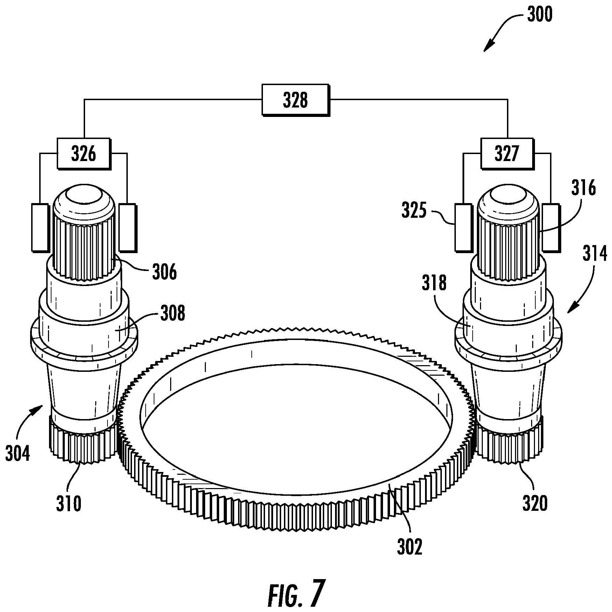

Referring now to FIG. 7, in another embodiment, the braking assembly 300 may also include at least one additional brake 324, 325 for applying additional braking force to the slewing ring bearing 302 when wind speeds exceed a certain threshold or if power is removed from the first or second yaw motors. In such instances, the first and second motors 306, 316 may not be capable of holding the slewing ring bearing 302 and may start to slip. In such embodiments, the first and second motors 306, 316 can have brakes 324, 325 that can be applied when properly pre-tensioned. In addition, as shown, the braking assembly 300 may also include one or more sensors 326, 327 for monitoring the wind speed. Thus, a controller 328 (such as the turbine controller 114 or a separate controller) can send a control signal to the braking assembly 300 (i.e., to the additional brakes 324, 325) when the wind speed exceeds the certain threshold such that the additional brakes 324, 325 can be applied to the first and second yaw motors 306, 316.

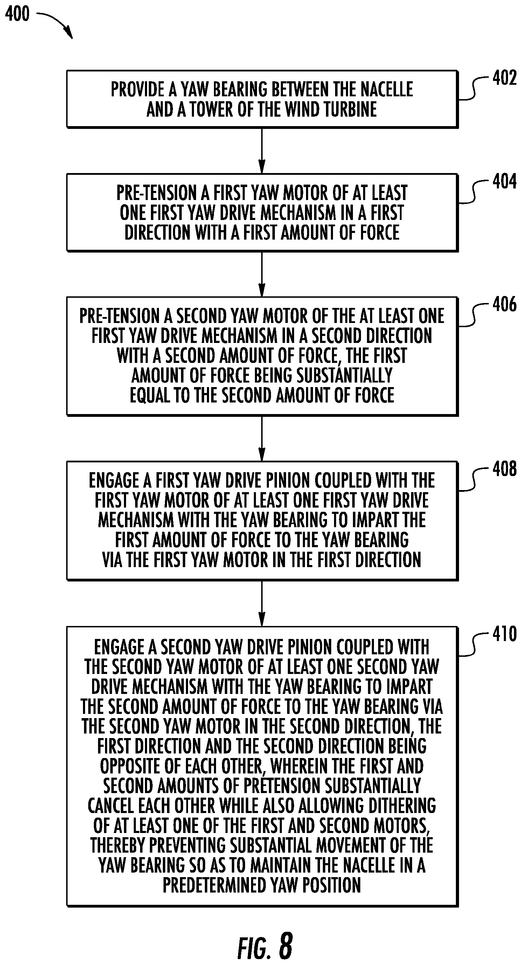

Referring now to FIG. 8, a flow diagram of one embodiment of a method 400 for braking a nacelle of a wind turbine is presented. The method 400 may be implemented using, for instance, the assembly 300 of the present disclosure discussed above with references to FIGS. 1-7. FIG. 8 depicts steps performed in a particular order for purposes of illustration and discussion. Those of ordinary skill in the art, using the disclosures provided herein, will understand that various steps of the method 400, or any of the methods disclosed herein, may be adapted, modified, rearranged, performed simultaneously, or modified in various ways without deviating from the scope of the present disclosure.

As shown at (402), the method 400 includes providing a yaw bearing between the nacelle and a tower of the wind turbine. As shown at (404), the method 400 includes pre-tensioning a first yaw motor of at least one first yaw drive mechanism in a first direction with a first amount of force. As shown at (406), the method 400 includes pre-tensioning a second yaw motor of the at least one first yaw drive mechanism in a second direction with a second amount of force, the first amount of force being substantially equal to the second amount of force. As shown at (408), the method 400 includes engaging a first yaw drive pinion coupled with the first yaw motor of at least one first yaw drive mechanism with the yaw bearing to impart the first amount of force to the yaw bearing via the first yaw motor in the first direction. As shown at (410), the method 400 includes engaging a second yaw drive pinion coupled with the second yaw motor of at least one second yaw drive mechanism with the yaw bearing to impart the second amount of force to the yaw bearing via the second yaw motor in the second direction, the first direction and the second direction being opposite of each other. Thus, the first and second amounts of force substantially cancel each other while also allowing dithering of at least one of the first and second motors, thereby preventing substantial movement of the yaw bearing, thereby substantially maintaining the nacelle in a predetermined yaw position. Such motor dithering can also be allowed in one or more of the motors (e.g., all of the motors or a subset of the motors) and be effectively locked in as long as the pretension amounts are not crossed.

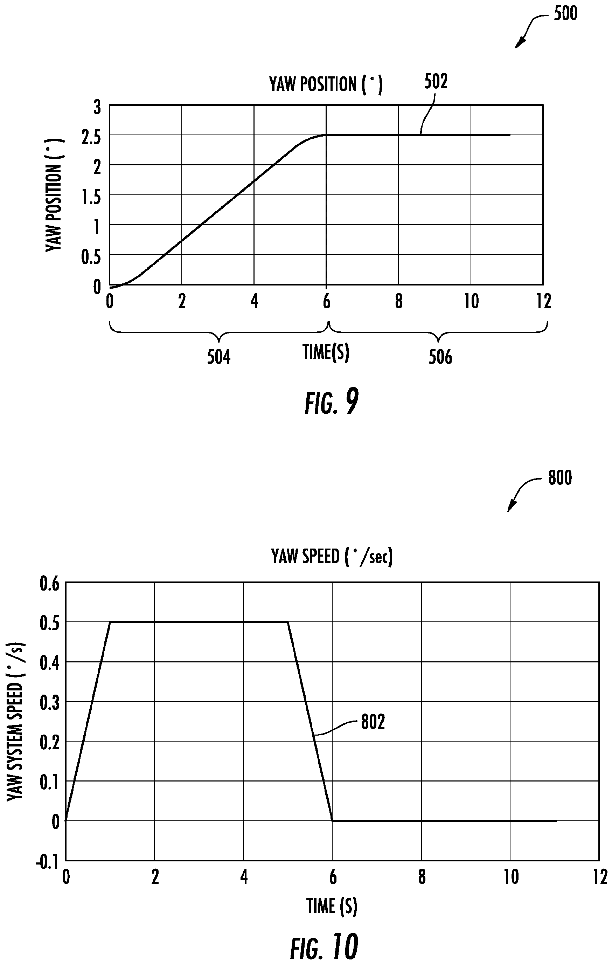

Referring now to FIGS. 9 and 10, various graphs are provided to further illustrate details of the present disclosure. In particular, FIG. 9 illustrates a graph 500 of an embodiment of yaw position 502 in degrees (°) (y-axis) versus time (x-axis) according to the present disclosure, particularly illustrating a move profile 504 of the first and second yaw motors of a plurality of first and second yaw drive mechanisms from zero (0) to six (6) seconds and a braking profile 506 thereafter.

Thus, as shown, FIG. 9 represents an embodiment of a move profile followed by a braking profile of the first and second yaw motors of a plurality of first and second yaw drive mechanisms, as described herein. As shown particularly in FIG. 9, the yaw drive mechanism(s) is commanded to yaw and moves from 0° to 2.5° (as shown between 0 seconds and 6 seconds). Further, in such embodiments, it is desirable for the the yaw drive mechanism(s) to maintain the 2.5° yaw position indefinitely (i.e., after six (6) seconds) with minimal slippage and minimal backlash. Further, it is assumed that the yaw drive mechanism(s) has a large gearbox that provides a significant amount of play on the yaw motor end before encroaching on the backlash hysteresis.

Referring now to FIG. 10, a graph 800 of an embodiment of the yaw system speed 802 (y-axis) versus time (x-axis) according to the present disclosure is illustrated. Thus, as shown, the graph 800 illustrates an embodiment of the yaw velocity profile as a resultant in real life. Thus, this graph 800 illustrates that the 0°/sec braking should be imperceptible (i.e., not able to be measured or noticed) even though the action of the first and second yaw motors is perceptible.

Furthermore, the skilled artisan will recognize the interchangeability of various features from different embodiments. Similarly, the various method steps and features described, as well as other known equivalents for each such methods and feature, can be mixed and matched by one of ordinary skill in this art to construct additional systems and techniques in accordance with principles of this disclosure. Of course, it is to be understood that not necessarily all such objects or advantages described above may be achieved in accordance with any particular embodiment. Thus, for example, those skilled in the art will recognize that the systems and techniques described herein may be embodied or carried out in a manner that achieves or optimizes one advantage or group of advantages as taught herein without necessarily achieving other objects or advantages as may be taught or suggested herein.

These and further aspects of the invention are summarized by the subject matter of the following clauses:
Clause 1. A braking assembly of a wind turbine, the braking assembly comprising:
   a slewing ring bearing;
   at least one first drive mechanism comprising a first motor and a first drive pinion that rotationally engages the slewing ring bearing, the first motor pre-tensioned in a first direction by a first amount of force; and
   at least one second drive mechanism comprising a second motor and a second drive pinion that rotationally engages the slewing ring bearing, the second motor pre-tensioned in a second direction with a second amount of force, the first direction and the second direction being opposite of each other, the first amount of force being substantially equal to the second amount of force,
   wherein the first and second amounts of force substantially cancel each other while also allowing dithering of at least one of the first and second motors, thereby preventing substantial rotational movement of the slewing ring bearing.
Clause 2. The braking assembly of clause 1, wherein the slewing ring bearing comprises a pitch bearing positioned between a rotor blade and a hub of the wind turbine.
Clause 3. The braking assembly of any of the preceding clauses, wherein the slewing ring bearing comprises a yaw bearing positioned between a nacelle and a tower of the wind turbine.
Clause 4. The braking assembly of any of the preceding clauses, wherein the first direction comprises a clockwise direction and the second direction is a counter-clockwise direction.
Clause 5. The braking assembly of any of the preceding clauses, wherein the first and second drive mechanisms further comprise first and second drive gearboxes, respectively, the first and second drive gearboxes coupled to each of the first and second drive motors and the first and second drive pinions, respectively.
Clause 6. The braking assembly of any of the preceding clauses, further comprising a plurality of first drive mechanisms and a plurality of second drive mechanisms, the at least one first drive mechanism being one of the plurality of first drive mechanisms and the at least one second drive mechanism being one of the plurality of second drive mechanisms.
Clause 7. The braking assembly of clause 6, wherein the plurality of first drive mechanisms and the plurality of second drive mechanisms are arranged circumferentially about the slewing ring bearing in an alternating configuration.
Clause 8. The braking assembly of any of the preceding clauses, further comprising at least one additional brake for applying additional braking force to at least one of the first motor or the second motor when wind speeds exceed a certain threshold or if power is removed from the first or second motors.
Clause 9. A yaw braking assembly of a wind turbine having a nacelle mounted atop a tower, the yaw braking assembly comprising:
   a yaw bearing coupled between the tower and the nacelle;
   at least one first yaw drive mechanism comprising a first yaw motor and a first yaw drive pinion that rotationally engages the yaw bearing, the first yaw motor pre-tensioned in a first direction by a first amount of force; and
   at least one second yaw drive mechanism comprising a second yaw motor and a second yaw drive pinion that rotationally engages the yaw bearing, the second yaw motor pre-tensioned in a second direction with a second amount of force, the first direction and the second direction being opposite of each other, the first amount of force being substantially equal to the second amount of force,
   wherein the first and second amounts of force substantially cancel each other while also allowing dithering of at least one of the first and second motors, thereby preventing substantial movement of the yaw bearing, thereby substantially maintaining the nacelle in a predetermined yaw position.
Clause 10. The yaw braking assembly of clause 9, wherein the first direction comprises a clockwise direction and the second direction is a counter-clockwise direction.
Clause 11. The yaw braking assembly of clauses 9-10, wherein the first and second yaw drive mechanisms further comprise first and second yaw drive gearboxes, respectively, the first and second yaw drive gearboxes coupled to each of the first and second yaw drive motors and the first and second yaw drive pinions, respectively.
Clause 12. The yaw braking assembly of clauses 9-11, further comprising a plurality of first yaw drive mechanisms and a plurality of second yaw drive mechanisms, the at least one first yaw drive mechanism being one of the plurality of first yaw drive mechanisms and the at least one second yaw drive mechanism being one of the plurality of second yaw drive mechanisms.
Clause 13. The yaw braking assembly of clause 12, wherein the plurality of first yaw drive mechanisms and the plurality of second yaw drive mechanisms are arranged circumferentially about the yaw bearing in an alternating configuration.
Clause 14. The yaw braking assembly of clauses 9-13, further comprising at least one additional brake for applying additional braking force to at least one of the first yaw motor or the second yaw motor when wind speeds exceed a certain threshold or if power is removed from the first or second yaw motors.
Clause 15. A method for braking a nacelle of a wind turbine, the method comprising:
   providing a yaw bearing between the nacelle and a tower of the wind turbine; pre-tensioning a first yaw motor of at least one first yaw drive mechanism in a first direction with a first amount of force;
   pre-tensioning a second yaw motor of at least one second yaw drive mechanism in a second direction with a second amount of force, the first amount of force being substantially equal to the second amount of force;
   engaging a first yaw drive pinion coupled with the first yaw motor of at least one first yaw drive mechanism with the yaw bearing to impart the first amount of force to the yaw bearing via the first yaw motor in the first direction; and
   engaging a second yaw drive pinion coupled with the second yaw motor of the at least one second yaw drive mechanism with the yaw bearing to impart the second amount of force to the yaw bearing via the second yaw motor in the second direction, the first direction and the second direction being opposite of each other,
   wherein the first and second amounts of force substantially cancel each other while also allowing dithering of at least one of the first and second motors, thereby preventing substantial movement of the yaw bearing so as to maintain the nacelle in a predetermined yaw position.
Clause 16. The method of clause 15, wherein the first direction comprises a clockwise direction and the second direction is a counter-clockwise direction.
Clause 17. The method of clauses 15-16, wherein the first and second yaw drive mechanisms further comprise first and second yaw drive gearboxes, respectively, the first and second yaw drive gearboxes coupled to each of the first and second yaw drive motors and the first and second yaw drive pinions, respectively.
Clause 18. The method of clauses 15-17, wherein the first and second yaw drive mechanisms further comprise a plurality of first yaw drive mechanisms and a plurality of second yaw drive mechanisms, the at least one first yaw drive mechanism being one of the plurality of first yaw drive mechanisms and the at least one second yaw drive mechanism being one of the plurality of second yaw drive mechanisms.
Clause 19. The method of clause 18, wherein the plurality of first yaw drive mechanisms and the plurality of second yaw drive mechanisms are arranged circumferentially about the yaw bearing in an alternating configuration.
Clause 20. The method of clauses 15-19, further comprising applying at least one additional brake to at least one of the first yaw motor or the second yaw motor when wind speeds exceed a certain threshold or if power is removed from the first or second yaw motors.

This written description uses examples to disclose the invention, including the best mode, and also to enable any person skilled in the art to practice the invention, including making and using any devices or systems and performing any incorporated methods. The patentable scope of the invention is defined by the claims, and may include other examples that occur to those skilled in the art. Such other examples are intended to be within the scope of the claims if they include structural elements that do not differ from the literal language of the claims, or if they include equivalent structural elements with insubstantial differences from the literal languages of the claims.

## Claims

1. A braking assembly of a wind turbine, the braking assembly comprising:
a slewing ring bearing;
at least one first drive mechanism comprising a first motor and a first drive pinion that rotationally engages the slewing ring bearing, the first motor pre-tensioned in a first direction by a first amount of force; and
at least one second drive mechanism comprising a second motor and a second drive pinion that rotationally engages the slewing ring bearing, the second motor pre-tensioned in a second direction with a second amount of force, the first direction and the second direction being opposite of each other, the first amount of force being substantially equal to the second amount of force,
wherein the first and second amounts of force substantially cancel each other while also allowing dithering of at least one of the first and second motors, thereby preventing substantial rotational movement of the slewing ring bearing.

2. The braking assembly of claim 1, wherein the slewing ring bearing comprises a pitch bearing positioned between a rotor blade and a hub of the wind turbine.

3. The braking assembly of any of the preceding claims, wherein the slewing ring bearing comprises a yaw bearing positioned between a nacelle and a tower of the wind turbine.

4. The braking assembly of any of the preceding claims, wherein the first direction comprises a clockwise direction and the second direction is a counter-clockwise direction.

5. The braking assembly of any of the preceding claims, wherein the first and second drive mechanisms further comprise first and second drive gearboxes, respectively, the first and second drive gearboxes coupled to each of the first and second drive motors and the first and second drive pinions, respectively.

6. The braking assembly of any of the preceding claims, further comprising a plurality of first drive mechanisms and a plurality of second drive mechanisms, the at least one first drive mechanism being one of the plurality of first drive mechanisms and the at least one second drive mechanism being one of the plurality of second drive mechanisms.

7. The braking assembly of claim 6, wherein the plurality of first drive mechanisms and the plurality of second drive mechanisms are arranged circumferentially about the slewing ring bearing in an alternating configuration.

8. The braking assembly of any of the preceding claims, further comprising at least one additional brake for applying additional braking force to at least one of the first motor or the second motor when wind speeds exceed a certain threshold or if power is removed from the first or second motors.

9. A method for braking a nacelle of a wind turbine, the method comprising:
providing a yaw bearing between the nacelle and a tower of the wind turbine;
pre-tensioning a first yaw motor of at least one first yaw drive mechanism in a first direction with a first amount of force;
pre-tensioning a second yaw motor of at least one second yaw drive mechanism in a second direction with a second amount of force, the first amount of force being substantially equal to the second amount of force;
engaging a first yaw drive pinion coupled with the first yaw motor of at least one first yaw drive mechanism with the yaw bearing to impart the first amount of force to the yaw bearing via the first yaw motor in the first direction; and
engaging a second yaw drive pinion coupled with the second yaw motor of the at least one second yaw drive mechanism with the yaw bearing to impart the second amount of force to the yaw bearing via the second yaw motor in the second direction, the first direction and the second direction being opposite of each other,
wherein the first and second amounts of force substantially cancel each other while also allowing dithering of at least one of the first and second motors, thereby preventing substantial movement of the yaw bearing so as to maintain the nacelle in a predetermined yaw position.

10. The method of claim 9, wherein the first direction comprises a clockwise direction and the second direction is a counter-clockwise direction.

11. The method of claim 9 or 10, wherein the first and second yaw drive mechanisms further comprise first and second yaw drive gearboxes, respectively, the first and second yaw drive gearboxes coupled to each of the first and second yaw drive motors and the first and second yaw drive pinions, respectively.

12. The method of any of claims 9 to 11, wherein the first and second yaw drive mechanisms further comprise a plurality of first yaw drive mechanisms and a plurality of second yaw drive mechanisms, the at least one first yaw drive mechanism being one of the plurality of first yaw drive mechanisms and the at least one second yaw drive mechanism being one of the plurality of second yaw drive mechanisms.

13. The method of claim 12, wherein the plurality of first yaw drive mechanisms and the plurality of second yaw drive mechanisms are arranged circumferentially about the yaw bearing in an alternating configuration.

14. The method of any of claims 9 to 13, further comprising applying at least one additional brake to at least one of the first yaw motor or the second yaw motor when wind speeds exceed a certain threshold or if power is removed from the first or second yaw motors.
